# EUROPEAN PATENT APPLICATION

(11) **EP 1 285 893 A1**
(43) Date of publication of application: **26.02.2003**
(21) Application number: 01925922.5
(22) Date of filing: 25.04.2001
(51) Int. Cl.: C03C 17/34, B60J 1/00

(54) **VEHICLE-USE LOW-REFLECTION GLASS**

(30) Priority: 09.05.2000 JP 2000135398
(71) Applicant: Central Glass Company, Limited, Ube-shi, Yamaguchi-ken 755-0001 (JP)
(72) Inventor: TOMIOKA, Takao, Iruma-gun, Saitama 354-0041 (JP)
(74) Representative: Manitz, Finsterwald & Partner GbR
(86) International application number: JP0103586
(87) International publication number: WO01085636

(57) **Abstract**

It is a vehicle-use low-reflection glass in which at least one side surface of a transparent glass substrate is coated with a reflection reducing layer formed by sequentially laminating from the glass surface side a light absorbing layer as a first layer having a refractive index of 2.2-2.8, a first dielectric layer as a second layer having a refractive index of 2.1-2.5 and a film thickness of 80nm to 120nm, and a second dielectric layer as a third layer having a refractive index of 1.45-1.55 and a film thickness of 60nm to ll0nm. This glass does not provide the driver of an opposing car with misidentification and uncomfortable feeling, and is particularly suitable for automotive windshields, by coating at least one surface side of a glass substrate with a reflection reducing layer formed by combining thin films of particular refractive indexes and film thicknesses.

## Description

### TECHNICAL FIELD

The present invention relates in particular to a vehicle-use low reflection glass in which the reflection phenomena of dashboard and its surrounding on a vehicle-use windshield surface or the occurrence of glare of the reflection light is reduced.

### BACKGROUND TECHNIQUE

Hitherto, various low reflection glasses and glasses belonging to that category have been proposed and put into practice. Particularly, in vehicle-use glasses, high-performance and multifunction glasses with various functions have been used in recent years. There has been a further desire for glasses that have more safety for the driver and passengers in a vehicle and are superior in habitability and mild to environment. Under such condition, there have been proposed glasses with low reflection and capability belonging to that category.

For example, in Japanese Patent Unexamined Publication Showa 64-70701, a transparent plate with a conductive, reflection-preventive film is described. It is disclosed therein one comprising, on a metal film for providing conductivity, a high refractive index dielectric film with a refractive index of 1.90-2.50 and a film thickness of 200Å-400Å, and on the surface a low refractive index dielectric film with a refractive index of 1.35-1.50 and a film thickness of 700Å-1,200Å.

Japanese Patent Unexamined Publication Heisei 9-156964 discloses a light-absorbing and reflection-preventive body formed on a substrate with a light absorbing film and a silica film from the substrate side. The light-absorbing and reflection-preventive body is characterized in that the light absorbing film has a thickness of 5·25nm.

Japanese Patent Unexamined Publication Heisei 11-271507 discloses a process for preparing a reflection preventive film by using a substrate having a refractive index of greater than 1.9 and by laminating four-layered thin films with a magnetron sputtering method.

Furthermore, Japanese Patent Unexamined Publication Heisei 11-49532 discloses a low reflection glass having on a transparent glass substrate having a refractive index of 1.47-1.53, a first layer having a refractive index of 2.00-2.60, a refractive index dispersion coefficient ν of 2-15 and an optical film thickness of 35-70nm, a second layer having a refractive index of 1.35-1.55, a refractive index dispersion coefficient ν of 50 or greater and an optical film thickness of 45-70nm, a third layer having a refractive index of 2.00-2.60, a refractive index dispersion coefficient ν of 2-15 and an optical film thickness of 45-135nm, and a fourth layer having a refractive index of 1.35-1.55, a refractive index dispersion coefficient ν of 50 or greater and an optical film thickness of 130-175nm, of which four layers are laminated on this order.

Relative to these, in particular, as a low reflection glass suitable for vehicle-use windshield, Japanese Patent Unexamined Publication Heisei 4-357134, which is related to an application of the present applicant, discloses a vehicular low reflection glass in which a first layer having a refractive index of 1.8-1.9 and a film thickness of 700-900Å and a second layer having a refractive index of 1.4-1.5 and a film thickness of 1100-1300Å are laminated on a surface of at least one side of a glass substrate and in which, with respect to a visible light incident on the film surface side at an incident angle between 50° and 70° to normal of the film surface, it is lower by 4.5-6.5% than reflectance of a normal glass without a thin film coating.

Furthermore, similarly Japanese Patent Unexamined Publication Heisei 4-357135 discloses a vehicular low reflection glass in which a first layer having a refractive index of 1.8-1.9 and a film thickness of 700-1000Å, a second layer having a refractive index of 2.05-2.3 and a film thickness of 1300-1600Å and a third layer having a refractive index of 1.4-1.5 and a film thickness of 1100-1300 Å are laminated on a surface of at least one side of a glass substrate and in which, with respect to a visible light incident on the film surface side at an incident angle between 50° and 70° to normal of the film surface, it is lower by 4.5-6.5% than reflectance of a normal glass without a thin film coating.

### (Task to be solved by the Invention)

However, according to those described in the above-mentioned Japanese Patent Unexamined Publication Showa 64-70701 and Japanese Patent Unexamined Publication Heisei 11-49532, it is necessarily difficult to obtain a sufficient and stable target reflection reduction for the above-mentioned particular obliquely incident light. Although, according to that described in Japanese Patent Unexamined Publication 11-271507, films are formed by DC magnetron sputtering method, which is one type of film-forming methods using vacuum, it is necessarily difficult to obtain a sufficient and stable target reflection reduction for the above-mentioned particular obliquely incident light.

Furthermore, although it is possible to achieve a sufficient reflection reduction effect for an obliquely incident light by a vehicular reflection reduction glass described in the above Japanese Patent Unexamined Publication Heisei 4-357134, it was not necessarily one having a low glare feeling of reflection light, such as excitation purity of the reflection light exceeding 30% and reaching about 35% at the maximum for a light having an incident angle of 0-40° and excitation purity of the reflection light partly exceeding 20% for a light having an incident angle of 50-70° .

Furthermore, although a vehicular reflection reducing glass described in the above Japanese Patent Unexamined Publication Heisei 4-357135 is much improved in glare feeling, for example, it is necessary to pay attention to the liquid management and the like due to the production by sol-gel process, it was not necessarily superior with respect to external appearance quality.

### DISCLOSURE OF THE INVENITON

### (Means for solving the Task)

The present invention was made in view of such task of the prior art and provides a low reflection glass that, for example, in case that it is used as an automotive windshield, effectively reduces driving disruption caused by the reflection onto the windshield from the dashboard through conventionally maintaining the reflection light with respect to a particularly obliquely incident light, that suppresses glare feeling of the reflection light even when viewed at every angle of the car interior and exterior, that does not provide the driver of an opposing car with misidentification and uncomfortable feeling, and that is particularly suitable for automotive windshields, by coating at least one surface side of a glass substrate with a reflection reducing layer formed by combining thin films of particular refractive indexes and film thicknesses.

That is, a vehicle-use low-reflection glass of the present invention is characterized in that at least one side surface of a transparent glass substrate is coated with a reflection reducing layer formed by sequentially laminating from the glass surface side a light absorbing layer as a first layer having a refractive index (550nm) of 2.2-2.8, a dielectric layer as a second layer having a refractive index (550nm) of 2.1-2.5 and a film thickness of 80nm to 120nm, and a dielectric layer as a third layer having a refractive index (550nm) of 1.45-1.55 and a film thickness of 60nm to 110nm.

Furthermore, a vehicle-use low-reflection glass of the present invention is characterized in that at least one of each nitride of titanium, zirconium, hafnium and tantalum and nitrides of alloys containing nickel is used as the light-absorbing layer.

Furthermore, a vehicle-use low-reflection glass of the present invention is characterized in that, with respect to an incident light incident at an incident angle between 40° and 80° to normal of the reflection reducing layer surface, the visible light reflectance on the reflection reducing layer surface side is reduced by 3% or greater than the reflectance on a glass surface of only the transparent glass substrate without a coating of the reflection reducing layer.

Furthermore, a vehicle use low reflection glass of the present invention is characterized in that, with respect to an oblique incident light incident to have an incident angle of 60° or less to normal of the reflection reducing layer surface, the visible light reflectance on the reflection reducing layer side is 10% or less.

Furthermore, a vehicle-use low-reflection glass of the present invention is characterized in that the transparent glass substrate is a laminated glass.

Furthermore, a vehicle-use low-reflection glass of the present invention is characterized in that the reflection reducing layer is formed by a film forming method using vacuum.

### BEST MODE FOR CARRYING OUT THE INVENITON

A low reflection glass of the present invention has a structure in which at least one side surface of a transparent glass substrate is coated with a reflection reducing layer formed by sequentially laminating from the glass surface side a light absorbing layer as a first layer having a refractive index (550nm) of 2.2^{.}2.8, a dielectric layer as a second layer having a refractive index (550nm) of 2.1-2.5 and a film thickness of 80nm to 120nm, and a dielectric layer as a third layer having a refractive index (550nm) of 1.45-1.55 and a film thickness of 60nm to 110nm.

Herein, the light-absorbing layer of the first layer is an important layer for neutralizing the reflection color tone from the reflection reducing layer, and it is possible to use at least one of each nitride of titanium, zirconium, hafnium and tantalum and nitrides of alloys containing nickel. The film thickness of the light-absorbing layer is preferably about 2-5nm in case that it is required to have a visible light transmittance of 70% or greater, as in the case of use for an automotive windshield. In the case of other side glasses, the film thickness may be 5nm or greater.

Furthermore, in case that it is formed of dielectric layers of two layers without using the light absorbing layer of the first layer, excitation purity of the visible light reflection becomes high. Thus, when viewed from the car interior side or car exterior side, it gives glare feeling and uncomfortable feeling. Furthermore, although it is possible to obtain a neutral reflection tone without uncomfortable feeling even by laminating four layers or more through combining high refractive index dielectric films and low refractive index dielectric films without providing the light absorbing layer, the cost becomes high.

As the first dielectric layer of the second layer, it is possible to use, for example, an oxide of titanium, tantalum and the like. Furthermore, as the second dielectric layer of the third layer, it is possible to use, for example, an oxide of silicon and the like.

If compounds having the same metal atom, for example, titanium nitride (the first layer) and titanium oxide (the second layer), are used for the light absorbing layer of the first layer and the first dielectric layer of the second layer, adhesion of the interface between the first layer and the second layer is improved, thereby making it superior in mechanical durability.

By making refractive index of the first layer and refractive index and the film thickness of the second layer and of the third layer within the ranges of the above values, it is possible to reduce the visible light reflectance on the reflection reducing layer side by 3% or greater than the reflectance on the glass surface of only a transparent glass substrate without a coating of the reflection reducing layer, with respect to the visible light on the film surface side that is incident at an incident angle between 40° and 80° to normal on the reflection reducing layer surface, and it is possible to obtain a low reflection glass having a neutral reflection color tone having no uncomfortable feeling.

Furthermore, in case that a low reflection glass of the present invention has a visible light transmittance of 70% or greater together with the visible light reflectance on the reflection reducing layer surface with respect to the obliquely incident visible light being 10% or lower, and particularly in case that it is used as an automotive windshield, the reflection of dashboard and the like disappears, thereby improving visibility to the driver and the like and making it safe. Furthermore, with respect to the environment such as the driver, other passengers and persons of the opposing cars, the environment such as human does not necessarily see the glass at a particular angle, and it suppresses glare feeling for the vision from all the directions, reduces fatigue of eyes and human bodies, dissolves unsafety caused thereby, and becomes mild in terms of both of human and material.

Furthermore, upon forming a film of the above reflection reducing layer, it is more preferable to form the film by a thin film producing method using vacuum such as sputtering and ion plating, since it is not necessary to pay an attention to the liquid management and the like such as sol-gel process, and since it is possible to obtain one superior in external quality.

The glass substrate may be either of colorless or colored one as long as it is a transparent glass. That is, for example, it may be blue, bronze, gray or green glass, and in particular one that tends to obtain heat ray and ultraviolet ray absorbing capacity is more preferable. Furthermore, as well as it can be used as a single plate, it can be used as heat ray reflection glass, multilayered or tempered glass, strength-improved glass, or curved glass. Furthermore, the glass substrate is not particularly limited to an inorganic or organic one.

### (Examples)

In the following, the present invention will be explained by examples. However, the present invention is not limited to these examples. Furthermore, the obtained low reflection glasses were evaluated by the following measurement methods.

### (1) Optical characteristics:

With respect to the visible light transmittance, the visible light reflectance (car exterior side <Rg>, car interior side <Rf>, wavelength range 380nm to 780nm) and the like in the case of normal incidence, U4000 type automated spectrophotometer (made by Hitachi Ltd.) was used, and instantaneous multi-photometry system MCPD-3000 (made by Otsuka Denshi) was used in the case of an oblique incidence of an incident angle of 59.5 degrees, thereby determining optical characteristics such as transmittance, reflectance, dominant wavelength and excitation purity in accordance with JIS Z8722 and JIS R 3106.

### (2) Heat resistance:

After maintaining the low reflection glass sample in boiling water for 2 hrs, the external appearance was observed by the eyes and judged. As a result of observing the external appearance by the eyes, one having no change was judged as satisfactory, and the symbol ○ was put thereon.

### (3) Humidity resistance:

After maintaining the low reflectance glass sample under an atmosphere of 50° and 95%RH for two weeks, the external appearance was observed by the eyes and judged. As a result of observing the external appearance by the eyes, one having no change was judged as satisfactory, and the symbol ○ was put thereon.

### (4) Film thickness:

As to the film thickness of each thin film, upon coating of each thin film, an uncoated portion was made, and its step difference was measured with a surface roughness meter (made by SLOAN Co., DEKTAK 3). After that, it was determined with supplementary. Furthermore, the above evaluation results are shown in Table 1. In the column of optical characteristics in the table, percentage, dominant and pure respectively refers to %, dominant wavelength nm, and excitation purity %. Furthermore, as the light source, it was conducted with transmittance: A light source and reflectance: D65 light source.

### Example 1

### ① Preparation of glass substrate

A green color tone float glass (MFL2.3) of a size of about 300mm × 300mm × about 2.3mm (thickness) was sequentially washed with neutral detergent, water rinsing and isopropyl alcohol and then dried.

### ②Film formation

The films were formed by the following order. Each target of Ti or SiO₂ was previously installed in a vacuum chamber of a DC magnetron sputtering apparatus, and the glass substrate was set in a manner to make it possible to move in a reciprocating manner to be opposed to the target. Then, the vacuum chamber was sufficiently evacuated to have a pressure of 1×1⁻⁴Pa before the film formation. After that, N₂ gas of a flow rate of 70SCCM was introduced into the vacuum chamber, and the pressure was maintained at about 0.3Pa. An electric power (DC) of about 1kW was applied to the above Ti target, thereby forming a titanium nitride film of a thickness of about 3.5nm as the first layer on the glass substrate with a conveyance speed of about 672 mm/min. After completing the film formation, the electric application to the Ti target was stopped.

Then, the inside of the above vacuum chamber was again evacuated until it becomes 1 × 10⁻⁴Pa. After that, O₂ gas of a flow rate of 80 SCCM was introduced into the vacuum chamber, and the pressure was maintained at about 0.3Pa. An electric power (DC) of about 3kW was applied to the above Ti target, thereby forming a titanium oxide film of a thickness of about 100nm as the second layer on the titanium nitride film, with a conveyance speed of about 23 mm/min. After completing the film formation, the application to the electric application to the Ti target was stopped.

Then, the inside of the above vacuum chamber was again evacuated until it becomes 1 × 10⁻⁴Pa. After that, Ar gas of a flow rate of 40 SCCM and O₂ gas of a flow rate of 40 SCCM were introduced into the vacuum chamber, and the pressure was maintained at about 0.3Pa. An electric power (rf) of about 1kW was applied to the above SiO₂ target, thereby forming a silicon oxide film of a thickness of about 80nm as the third layer on the titanium oxide film, with a conveyance speed of about 19 mm/min. After that, the electric application to the SiO₂ target was stopped, and the glass was taken out of the film-forming chamber. Furthermore, when the titanium oxide film was formed on the titanium nitride layer of the first layer, the titanium nitride layer was partly in an oxidized condition.

### ③Lamination

Then, the glass taken out of the film-forming chamber was put into an autoclave, and the film-formed surface was arranged outside. A laminated glass was prepared through heating and bonding using a green color tone float glass (UMFL2.3) of the same size and an adhesive interlayer film (polyvinyl butyral, made by Sekisui Chemical Co., Ltd.) of a thickness of 0.76mm.

As a result, as shown in Table 1, the visible light transmittance was not lower than 70%, and excitation purities on the car interior side and the car exterior side of normal incidence were 5.8% and 9.2%, which are not greater than 10%. Therefore, it does not have glare feeling and tends to harmonize with the environment without uncomfortable feeling. Furthermore, in fact, the reflectance on the car interior side, with respect to an oblique incidence (incident angle 59.5° ), supposing the case in which it was installed in a car, is also 8.3%, which is lower by about 5% as compared with one (Comparative Example 3) having no film. Therefore, it was excellent due to its less reflection of dashboard and the like. Furthermore, the excitation purity in the case of an incident angle of 20° was 5.9%, and that in the case of 40° was 12.3%. At either angle, the excitation purity was low. Thus, it had no glare feeling and was excellent.

Furthermore, also regarding durability such as heat resistance, humidity resistance and adhesion resistance, it was one sufficiently satisfying performance as a laminated glass and was a desired low reflection laminated glass. Furthermore, weather resistance (sunshine weather meter, about 1,000 hr exposure: no abnormality in the external appearance) and other various characteristics relating to laminated glass were also evaluated. With this, either one was satisfactory and had a superior performance.

Furthermore, as to refractive index (550nm) of the reflection-reducing layer of Example 1, that of the titanium nitride layer of the first layer was about 2.3, that of the titanium oxide of the second layer was about 2.3, and silicon oxide layer of the third layer was about 1.5. Refractive index of each layer was determined by optical calculation relating thin films.

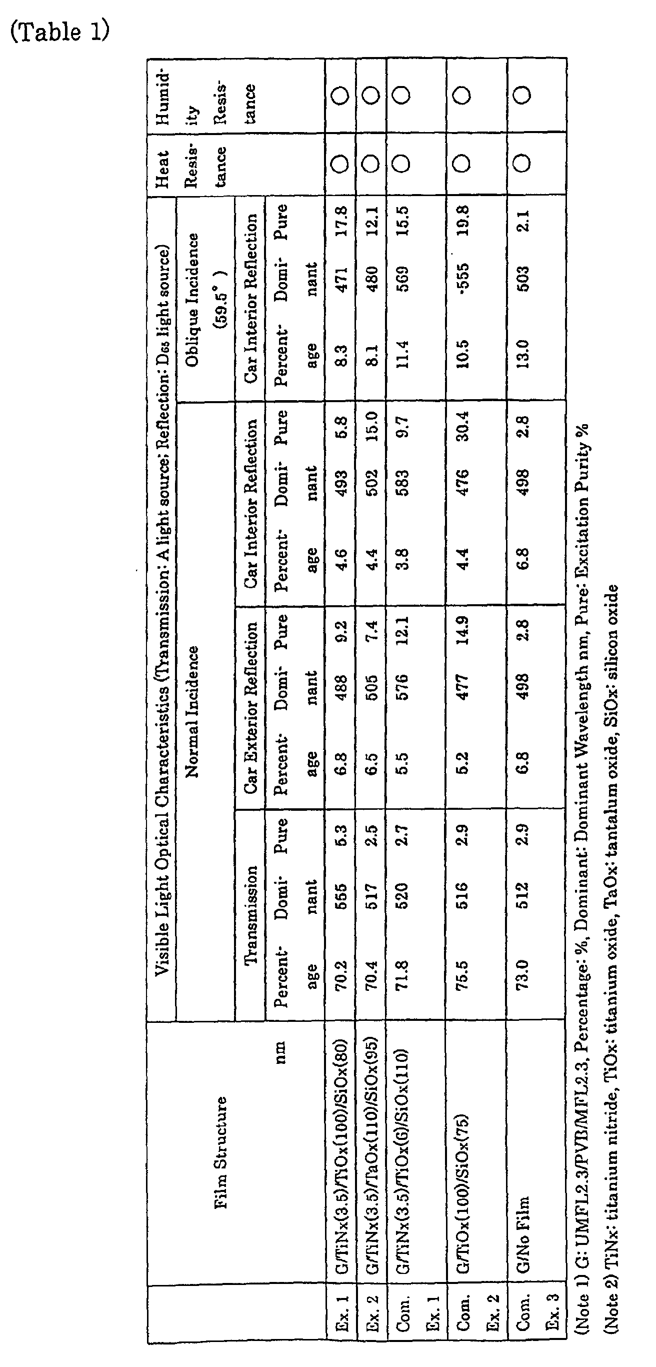

### Example 2

Similar to Example 1, each target of Ti, Ta or SiO₂ was previously installed in a vacuum chamber of a DC magnetron sputtering apparatus, and the vacuum chamber was sufficiently evacuated by the same method as that of Example 1 until the pressure before the film formation becomes 1 × 10⁻⁴Pa. After that, N₂ gas of a flow rate of 70SCCM was introduced into the vacuum chamber, and the pressure was maintained at about 0.3Pa. An electric power (DC) of about 1kW was applied to the above Ti target, thereby forming a titanium nitride film of a thickness of about 3.5nm as the first layer on the glass substrate with a conveyance speed of about 672 mm/min. After completing the film formation, the electric application to the Ti target was stopped.

Then, the inside of the above vacuum chamber was again evacuated until it becomes 1 × 10⁻⁴Pa. After that, O₂ gas of a flow rate of 80 SCCM was introduced into the vacuum chamber, and the pressure was maintained at about 0.3Pa. An electric power (DC) of about 2kW was applied to the above Ta target, thereby forming a tantalum nitride film of a thickness of about 110nm as the second layer on the titanium nitride film, with a conveyance speed of about 23 mm/min. After completing the film formation, the electric application to the Ta target was stopped.

Then, the inside of the above vacuum chamber was again evacuated until it becomes 1 × 10⁻⁴Pa. After that, Ar gas of a flow rate of 40 SCCM and O₂ gas of a flow rate of 40 SCCM were introduced into the vacuum chamber, and the pressure was maintained at about 0.3Pa. An electric power (rf) of about 1kW was applied to the above SiO₂ target, thereby forming a silicon oxide film of a thickness of about 95nm as the third layer on the tantalum oxide film, with a conveyance speed of about 16 mm/min. After that, the electric application to the SiO₂ target was stopped, and the glass was taken out of the film-forming chamber, and a laminated glass was produced similar to Example 1.
Furthermore, when the tantalum oxide film was formed on the titanium nitride layer of the first layer, the titanium nitride layer was partly in an oxidized condition. The evaluation results are shown in Table 1.

In the obtained low reflection laminated glass, the excitation impurities of the car exterior side and the car interior side in the case of normal incidence were 7.4% and 15%, which are somewhat higher as compared with Example 1. However, other characteristics are similar or superior. Furthermore, all of the other performances were satisfactory and showed superior low reflection performances as desired. Furthermore, regarding refractive index (550nm), the titanium nitride layer of the first layer was about 2.3, the tantalum nitride layer of the second layer was about 2.2, and the SiOx layer of the third layer was about 1.5.

### Comparative Example 1

Similar to Example 1, each target of Ti or SiO₂ was previously installed in a vacuum chamber of a DC magnetron sputtering apparatus, and the vacuum chamber was sufficiently evacuated by the same method as that of Example 1 until the pressure before the film formation becomes 1 × 10⁻⁴Pa. After that, N₂ gas of a flow rate of 70SCCM was introduced into the vacuum chamber, and the pressure was maintained at about 0.3Pa. An electric power (DC) of about 1kW was applied to the above Ti target, thereby forming a titanium nitride film of a thickness of about 3.5nm as the first layer on the glass substrate with a conveyance speed of about 672 mm/min. After completing the film formation, the electric application to the Ti target was stopped.

Then, the inside of the above vacuum chamber was again evacuated until it becomes 1 × 10⁻⁴Pa. After that, O₂ gas of a flow rate of 80 SCCM was introduced into the vacuum chamber, and the pressure was maintained at about 0.3Pa. An electric power (DC) of about 3kW was applied to the above Ti target, thereby forming a titanium oxide film of a thickness of about 6nm as the second layer on the titanium nitride film, with a conveyance speed of about 383 mm/min. After completing the film formation, the electric application to the Ti target was stopped.

Then, the inside of the above vacuum chamber was again evacuated until it becomes 1 × 10⁻⁴Pa. After that, Ar gas of a flow rate of 40 SCCM and O₂ gas of a flow rate of 40 SCCM were introduced into the vacuum chamber, and the pressure was maintained at about 0.3Pa. An electric power (rf) of about 1kW was applied to the above SiO₂ target, thereby forming a silicon oxide film of a thickness of about 110nm as the third layer on the titanium nitride film, with a conveyance speed of about 14 mm/min. After that, the electric application to the SiO₂ target was stopped, and the glass was taken out of the film-forming chamber, and a laminated glass was produced similar to Example 1. Furthermore, when the titanium oxide film was formed on the titanium nitride layer of the first layer, the titanium nitride layer was partly in an oxidized condition. The evaluation results are shown in Table 1.

In the obtained low reflection laminated glass, the reflectances of the car exterior side and the car interior side in the case of normal incidence were 5.5% and 3.8%, which are respectively lower by about 1% than the reflectances of Example 1. The car interior reflectance with respect to oblique incidence (incident angle: about 59.5° ) was in contrast 11.4%, which is greater by about 3% than the case of Example 1. Thus, it was not a desired one due to its strong reflection of dashboard and the like. Furthermore, regarding refractive index (550nm), the titanium nitride layer of the first layer was about 2.3, the titanium oxide layer of the second layer was about 2.3, and the silicon oxide layer of the third layer was about 1.5.

### Comparative Example 2

Similar to Example 1, each target of Ti or SiO₂ was previously installed in a vacuum chamber of a DC magnetron sputtering apparatus, and the vacuum chamber was sufficiently evacuated by the same method as that of Example 1 until the pressure before the film formation becomes 1 × 10⁻⁴Pa. After that, O₂ gas of a flow rate of 80SCCM was introduced into the vacuum chamber, and the pressure was maintained at about 0.3Pa. An electric power (DC) of about 3kW was applied to the above Ti target, thereby forming a titanium oxide film of a thickness of about 100nm as the first layer on the glass substrate with a conveyance speed of about 23 mm/min. After completing the film formation, the electric application to the Ti target was stopped.

Then, the inside of the above vacuum chamber was again evacuated until it becomes 1 × 10⁻⁴Pa. After that, Ar gas of a flow rate of 40 SCCM and O₂ gas of a flow rate of 40 SCCM were introduced into the vacuum chamber, and the pressure was maintained at about 0.3Pa. An electric power (rf) of about 1kW was applied to the above SiO₂ target, thereby forming a silicon oxide film of a thickness of about 75nm as the second layer on the titanium oxide film, with a conveyance speed of about 20 mm/min. After that, the electric application to the SiO₂ target was stopped, and the glass was taken out of the film-forming chamber, and a laminated glass was produced similar to Example 1.

In the obtained low reflection laminated glass, transmittance of the visible light was as high as 75.5%. However, excitation purity of the car interior reflection was as high as about 30%, causing glare feeling, and the car interior reflectance with respect to an oblique incidence (incident angle: about 59.5° ) was as high as 10.5%. Thus, it was not a desired one. Furthermore, regarding refractive index (550nm), the titanium oxide layer of the first layer was about 2.3 and the silicon oxide layer of the second layer was about 1.5.

### Comparative Example 3

Using a glass similar to Example 1, a laminated glass was prepared without laminating thin films. The evaluation results are shown in Table 1. In the obtained laminated glass, reflectances of both surfaces of the car interior side and the car exterior side in the case of normal incidence were as high as 6.8%, and the car interior reflectance with respect to an oblique incidence (incident angle: about 59.5° ) was as high as 13.0%. Thus, it was strong in reflection of dashboard and the like. Industrial Usability

As described in detail as above, the present invention satisfies a visible light transmittance of not lower than 70%, reduces reflectance of an obliquely incident light of 40° to 80° by 3% or greater as compared with a glass substrate having no film coating by combining thin films of particular refractive indexes and film thicknesses in case that it is used for a vehicular windshield. In particular, the reflection phenomena of dashboard or its peripheral portion is reduced by laminating films by a film forming method using vacuum, thereby improving driver visibility and improving safety by preventing misidentification or eye fatigue or the like. Furthermore, in contrast with the current use of those of black color or dark colors close to it or of embossed dashboard materials, it has a wide selection range in material and color and meets the needs further. Thus, it is possible to provide a useful vehicular low reflection glass in wide fields

## Claims

1. A vehicle-use low-reflection glass **characterized in that** at least one side surface of a transparent glass substrate is coated with a reflection reducing layer formed by sequentially laminating from the glass surface side a light absorbing layer as a first layer having a refractive index (550nm) of 2.2-2.8, a first dielectric layer as a second layer having a refractive index (550nm) of 2.1-2.5 and a film thickness of 80nm to 120nm, and a second dielectric layer as a third layer having a refractive index (550nm) of 1.45-1.55 and a film thickness of 60nm to 110nm.

2. A vehicle-use low-reflection glass according to claim 1, wherein at least one of each nitride of titanium, zirconium, hafnium and tantalum and nitrides of alloys containing nickel is used as the light-absorbing layer.

3. A vehicle-use low-reflection glass according to claim 1 or claim 2, wherein, with respect to an incident light incident at an incident angle between 40° and 80° to normal of the reflection reducing layer surface, a visible light reflectance on the reflection reducing layer surface side is reduced by 3% or greater than the reflectance on a glass surface of only the transparent glass substrate without a coating of the reflection reducing layer.

4. A vehicle-use low-reflection glass according to claims 1 to 3, wherein, with respect to an oblique incident light incident to have an incident angle of 60° or less to normal of the reflection reducing layer surface, the visible light reflectance on the reflection reducing layer side is 10% or less.

5. A vehicle-use low-reflection glass according to claims 1 to 4, wherein the transparent glass substrate is a laminated glass.

6. A vehicle-use low-reflection glass according to claims 1 to 5, wherein the reflection reducing layer is formed by a film forming method using vacuum.
